# DEMANDE DE BREVET EUROPEEN

(11) **EP 0 586 284 A1**
(43) Date de publication de la demande: **09.03.1994**
(21) Numéro de dépôt: 93402088.4
(22) Date de dépôt: 24.08.1993
(51) Int. Cl.: G01S 13/87, G01S 7/00

(54) **Procédé de compression du volume d'informations transmises pour des transmissions de pistes**

(30) Priorité: 01.09.1992 FR 9210432; 06.11.1992 FR 9213395
(71) Demandeur: THOMSON-CSF, 75008 Paris (FR)
(72) Inventeur: Dhiver, Jean-Louis, F-92402 COURBEVOIE CEDEX (FR)
(74) Mandataire: Benoit, Monique

(57) **Abrégé**

L'invention est relative à l'optimisation d'un signal périodique de transmission de pistes. Les pistes pour lesquelles la position réelle du mobile se situe, par rapport à une position extrapolée à partir d'informations reçues antérieurement, à l'intérieur d'une zone de proximité prédéterminée centrée sur la position extrapolée sont transmise sous une forme réduite.

## Description

L'invention se situe dans le domaine des transmissions automatiques de données en particulier dans le domaine des transmissions de pistes.

On sait qu'une piste est un ensemble de données ordonnées caractérisant un mobile notamment un engin aérien. Ces données comprennent une identification de la piste, des données dites d'habillage de la piste et enfin des données cinématiques relatives au mobile.

Les données d'habillage comportent toutes les informations permanentes relatives au mobile constituant la piste. On peut citer à titre d'exemple non limitatif la nature du mobile, son numéro de plan de vol, une mention ami-ennemi...

Les données cinématiques du mobile doivent être rafraîchies périodiquement. Les pistes sont élaborées dans des centres de détection (CD) équipés par exemple de moyens de détection radar, et transmises à des centres de contrôle et coordination (centre C2) qui regroupent les informations en provenance de plusieurs CD. Chaque CD. a en charge une zone géographique. En temps de guerre ou de manoeuvres les CD. sont constitués par des unités mobiles, équipées de moyens rustiques, en particulier de moyens de transmission ne permettant pas de gros débits d'informations. Pour le centre C2 l'exploitation des informations relatives aux pistes n'est intéressante que si les données relatives à ces pistes sont suffisamment précises, ce qui implique que les données sont transmises en temps quasi-réel, c'est-à-dire au fur et à mesure de leur élaboration..

Plus il y a d'informations à transmettre et donc plus il y a de pistes, plus le temps pour les transmettre est long et plus les imprécisions croissent. Or quand un grand nombre de pistes est à transmettre par un CD., cela signifie qu'il se passe vraisemblablement quelque chose d'important, du point de vue opérationnel, dans la zone géographique contrôlée par le CD. Il est donc important particulièrement à ces moments, de transmettre rapidement les données relatives aux pistes. C'est précisément à ces moments, du fait même du grand nombre de données à transmettre et du temps nécessaire pour le faire que le temps alloué pour la transmission du message de piste ne permet pas la transmission de la situation complète renouvelée aussi souvent que nécessaire.

L'invention vise la réduction du volume d'informations à transmettre en minimisant la dégradation de la qualité de la représentation d'une situation aérienne, terrestre, ou maritime élaborée au moins partiellement à l'aide des informations transmises par un CD.

L'idée à la base de l'invention repose sur le constat qu'un mobile objet d'une piste n'est pas manoeuvrante en permanence. Pendant des parties importantes de sa trajectoire le mobile garde son cap et sa vitesse. Il en résulte que la position réelle du mobile diffère peu, pendant ces parties de la trajectoire, d'une position que l'on peut calculer à partir de positions successives antérieures. Le destinataire du message de situation peut donc se contenter pour un certain nombre de pistes d'une information selon laquelle la position du mobile extrapolée par calcul ne diffère pas, dans des limites convenues entre le C2 et le CD, de la position réelle. L'invention porte sur la transmission sous la forme d'un message réduit de ces pistes qui sont peu manoeuvrantes. Une piste ainsi transmise peut ne comporter que le numéro de la piste et un signe indiquant que la position réelle du mobile reste dans ces limites. Il peut aussi être prévu plusieurs signes susceptibles d'être accolés au numéro de la piste, chaque signe ayant une signification propre quant aux éloignements de la position réelle du mobile par rapport à sa position extrapolée. Une seule transmission de signe convenu, précédant ou suivant de façon convenue les numéros de piste concernés peut suffire pour plusieurs pistes.

Enfin, il peut être convenu entre le centre C2 et le CD de ne transmettre aucune information sur les pistes les moins manoeuvrantes.

L'invention comporte une méthode d'estimation relative des manoeuvres des mobiles composants la situation, permettant de sélectionner les pistes qui seront transmises sous forme réduite.

Selon l'invention il est tenu un registre des pistes déjà transmises et un registre des pistes détectées. En principe une piste déjà transmise est encore à transmette, au moins en ce qui concerne les données cinématiques du mobile dès qu'une nouvelle position a été déterminée.

Pour chaque mobile il est calculé par extrapolation, par un ordinateur programmé à cet effet, pour une heure dite heure d'utilisation de l'information, deux positions.

La première position est calculée par extrapolation de la trajectoire du mobile à partir des données les plus récentes figurant dans le registre des pistes détectées. La deuxième position est calculée par extrapolation de la trajectoire du mobile à partir des données de la dernière position transmise.

Les distances entre les deux positions extrapolées du mobile permettent d'établir un classement des pistes par distances décroissantes. Les pistes transmises en totalité, en priorité sont celles pour lesquelles la distance entre ces deux positions est la plus grande.

Les pistes à transmettre pour la première fois peuvent bénéficier d'une priorité, exprimée arbitrairement en distance, et qui permettra donc d'insérer la nouvelle piste avec une priorité de transmission connue parmi les autres pistes. De même il peut être attribué pour chaque élément d'habillage non encore transmis, d'une piste déjà transmise, une distance arbitrairement fixée qui viendra s'ajouter à la distance calculée comme indiqué ci-dessus.

L'heure d'utilisation est une heure convenue, qui en général est déduite de l'heure prévue de début de transmission de la nouvelle situation par addition d'un temps fixe ou reçu périodiquement du centre C2.

Lorsqu'un message réduit a été, pour une piste, précédemment transmis, la position inscrite dans le registre des pistes transmises est la position extrapolée à partir des données de la transmission de numéro d'ordre (n-2), pour la transmission de numéro d'ordre (n-1), la transmission à effectuer ayant le numéro d'ordre (n). Dans la suite de l'exposé le terme "position extrapolée" sera réservé aux positions calculées à partir des données de l'un ou de l'autre registre pour l'heure d'utilisation. On ne parlera que, de positions du mobile, pour les pistes transmises, que ces positions soient ou non extrapolées elles sont traitées de même manière.

On vérifie ensuite si la première position, qui bien que fictive puisqu'elle même extrapolées peut être considérée comme la position réelle puisqu'élaborée à partir des données réelles les plus récentes se situe ou non à l'intérieur d'une zone dite de proximité dont les contours ont une forme géométrique simple et qui est centrée sur la seconde position.

On transmet ensuite sous une forme dite réduite et si cela est nécessaire, les pistes dont le mobile se situe dans une zone de proximité convenue. La forme réduite ne contient que l'identification de la piste et un signe permettant d'identifier de façon convenue les dimensions de la zone de proximité. Elle peut aussi être réduite au point qu'on ne transmet aucune information.

La nécessité de transmettre des pistes sous forme réduite apparaît lorsque le nombre de pistes à transmettre multiplié par le temps de transmission normal d'une piste est supérieur au temps de transmission alloué par le centre C2 au CD.

Si cela se produit on vérifie que la somme des temps de transmission sous forme réduite des pistes dont le mobile se trouve dans la zone de proximité de plus petite dimension, et, du temps de transmission des autres pistes, est inférieure au temps alloué. Si ce n'est pas le cas on peut augmenter le nombre de pistes transmises sous forme réduite en sélectionnant en outre les pistes dont le mobile se situe dans la zone de proximité de dimensions immédiatement supérieures préalablement convenue. Si le temps alloué est encore dépassé un certain nombre de pistes ne seront pas transmises.

Cette invention améliore de façon importante les possibilités d'utilisation de la situation par le système destinataire. En particulier, si le système destinataire doit réaliser la corrélation ou la fusion de pistes provenant de sources différentes, l'utilisation des messages pistes réduits lui permet de conserver des fenêtres de corrélation de taille réduite pour les pistes renouvelées par messages piste réduit, tandis qu'il est contraint d'élargir de façon importante les fenêtres de corrélation des pistes non transmises. Cette possibilité permet de réduire de façon importante les risques d'erreur d'association de pistes lors d'opérations de corrélation ou de fusion.

En résumé l'invention est relative à un procédé de réduction de la quantité d'informations contenues dans un signal de transmission de pistes de mobiles détectés et suivis par des moyens de détection, le signal étant émis de façon périodique d'un moyen émetteur vers un moyen récepteur, chaque piste comportant des données d'identification de la piste, des données d'habillage, et des données cinématiques notamment de position et de vitesse du mobile objet de la piste, procédé caractérisé en ce que:
- on tient un premier registre des pistes détectées, ce registre contenant notamment les données cinématiques du mobile les plus récentes;
- on tient un second registre des pistes déjà transmises, ce registre comportant notamment les données cinématiques du mobile transmises lors de la précédente transmission de la piste;
- on calcule à partir des données du premier registre, pour une heure fixée, une première position estimée du mobile en supposant que le mobile va à partir de la dernière position détectée conserver son vecteur vitesse;
- on calcule à partir des données du second registre, pour la même heure fixée, une seconde position estimée du mobile en supposant que le mobile va à partir de la dernière position transmise conserver son vecteur vitesse;
- on détermine si la première position du mobile est ou non à l'intérieur de zones de proximité de contours géométriques simples et de dimensions convenues centrées sur la seconde position du mobile;
- on répartit les pistes à transmettre par classes d'appartenance aux zones de proximité;
- on détermine si la durée de transmission des pistes à transmettre est supérieure ou non à une durée préalablement fixée;
- si la durée de transmission est inférieure à la durée fixée toutes les pistes sont transmises normalement ;
- si la durée est supérieure à la durée fixée on transmet des pistes des mobiles dont la première position se situe à l'intérieur d'une des zones de proximités, sous une forme réduite.

Dans une première forme réduite le message de transmission de la piste ne comporte que le signe d'identification de la zone et le numéro d'identification de la piste. Le message peut aussi être réduit par la non transmission des pistes des zones les moins étendues

La forme la plus simple de la zone de proximité est le cercle centré sur la seconde position du mobile, les dimensions de la zone étant alors des rayons de taille croissante pour les différentes zones. Dans ce cas la détermination de la présence du mobile dans la zone se ramènera à un calcul de distance entre la première et la seconde position et à une comparaison aux rayons des zones convenues.

Cependant les fenêtres de recherches peuvent aussi être définies par des rectangles.

Lorsqu'une piste a été transmise sous forme réduite, elle figure avec des données cinématiques qui sont des données réelles pour le premier registre et des données réelles ou extrapolées pour le second registre.

De préférence les vecteurs vitesse du mobile sont calculés par filtrage de Kalman sur les positions successives réelles du mobile pour le premier registre et les positions successives réelles ou extrapolées pour le second registre.

Les conditions d'utilisation de l'invention ainsi qu'un exemple de réalisation du procédé selon l'invention seront ci-après décrits en référence aux dessins annexés dans lesquels :
- la figure 1 est un schéma illustrant une situation fictive dans laquelle un centre C2 est en liaison avec plusieurs CD dont deux sont représentés de façon plus détaillée.;
- la figure 2 représente de façon schématique des sous-ensembles fonctionnels participant à la réalisation de l'invention.
- la figure 3 est destinée à illustrer des formes possibles de zones de proximité.

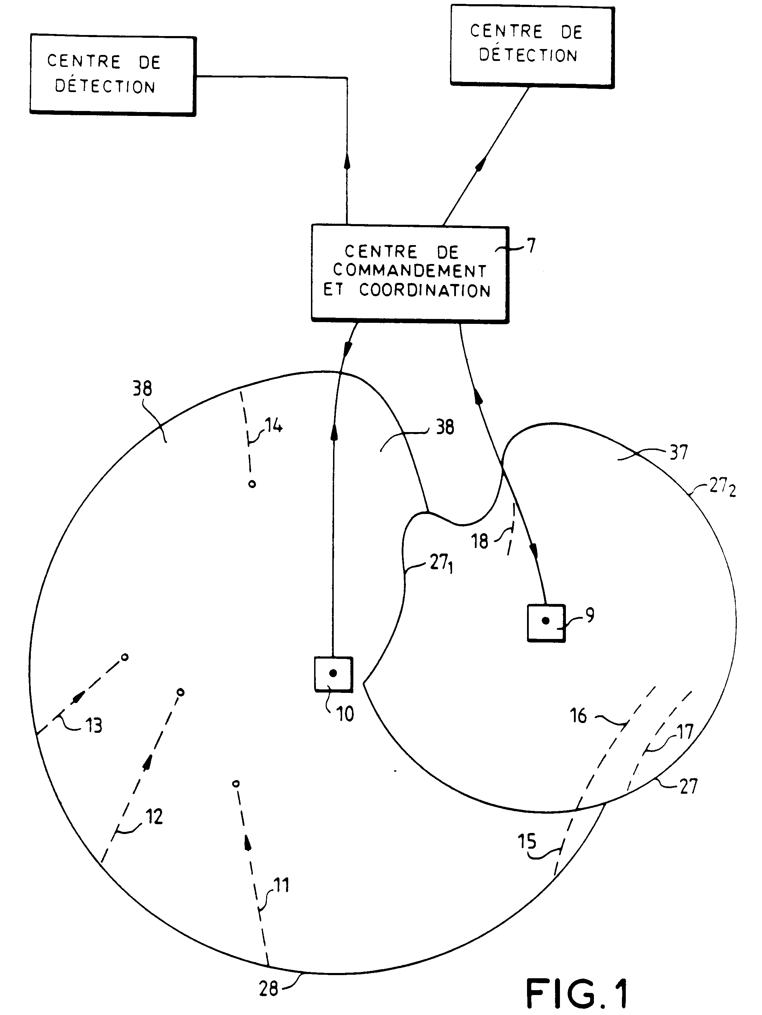

La figure 1 représente un exemple d'utilisation du procédé selon l'invention. Des contours 27 et 28 délimitent des zones géographiques 37, 38 attribuées respectivement à des centres de détection 9 et 10 matérialisés par des carrés. Dans un but de clarté de l'exposé des zones de recouvrement entre les deux zones géographiques n'ont pas été représentées. Une partie 27-1 du contour 27 peut par exemple être constituée par une ligne de crête au-delà de laquelle les moyens de détection du centre 9 constitués de radars ne peuvent pas voir les mobiles arrivant à basse altitude, une partie 27-2 du contour 27 peut être constituée par les limites de détection propres du radar du centre 9. Des lignes pointillées 11 à 15 dans la zone 38 et 16 à 18 dans la zone 37 représentent des trajectoires de mobiles détectés. Les durées de transmission de chacun des C.D. sont fixées de façon prédéterminée par le centre C2. D'autres centres de détection avec lesquels le centre C2 est en liaison ont été représentés de façon générique par un carré.

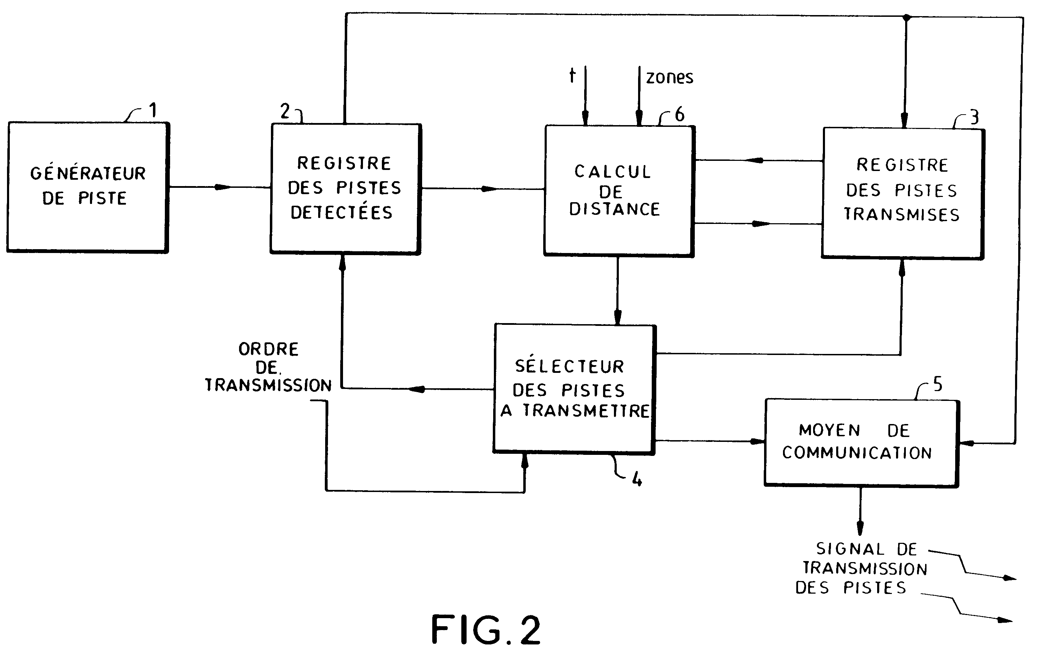

La figure 2 représente de façon schématique les sous-ensembles fonctionnels participant à la réalisation de l'invention.

Un sous-ensemble fonctionnel 2 reçoit d'un générateur de pistes 1 constitué de moyens de détection radar et de moyens de calcul, des informations relatives aux pistes. Le sous-ensemble fonctionnel 2 comporte essentiellement des moyens de mémorisation et des moyens de calcul permettant d'ordonnancer les informations relatives à chaque piste dans des zones mémoires et de retrouver les adresses mémoires de chaque piste.

Un sous-ensemble fonctionnel 6 reçoit les pistes détectées et les compte.

Si le nombre de pistes détectée est supérieur à un seuil n tel que le temps de transmission des n pistes est supérieur au temps alloué, le sous ensemble fonctionnel 6 déclenche la procédure de recherche de pistes à transmettre de façon réduite.

Dans le cas contraire le sous ensemble fonctionnel 6, reçoit les pistes du sous ensemble 2, effectue les calculs de position extrapolée pour l'heure d'utilisation et transmet les informations ainsi modifiées des pistes, à un sélecteur des pistes à transmettre 4.

Les calculs de positions extrapolées sont recommencés de façon itérative, chaque fin de calcul pour l'ensemble des pistes déclenche le remplacement des informations de pistes à transmettre figurant dans le sélecteur 4, par les informations les plus récentes. Cette façon de procéder provient de ce que l'ordre de transmission des pistes est reçu de façon extérieure. En conséquence au reçu de l'ordre, les pistes présentes dans le sélecteur 4 sont transmises. Il en résulte que l'heure d'estimation de la position des pistes est la même pour toutes les pistes.

Au reçu de l'ordre de transmission les pistes figurant dans le sélecteur 4 sont transmise d'une part vers des moyens de communication 5 et d'autre part vers un registre 3 des pistes transmises.

Les sous-ensembles 2 et 3 sont organisés de façon semblables et constituent respectivement des registres des pistes détectées et des pistes transmises.

Il a été vu ci-dessus que si le nombre de pistes est supérieur au nombre n, le sous ensemble 6 déclenche la procédure de recherche des pistes à transmettre de façon réduite. A cette fin le sous-ensemble 6 déclenche en séquence la réception des informations relatives à chaque piste figurant à la fois dans les registres 2 et 3. Le sous ensemble 6 effectue les calculs de position extrapolée d'une part à partir des informations contenues dans le registre 2 et d'autre part à partir des informations reçues du registre 3. Le sous ensemble 6 reçoit de l'extérieur une information relative au temps de transmission alloué et une information sur la dimension des différentes zones de proximité. Dans le cas de l'exemple de réalisation cette zone est constituée par un rectangle dont les côtés sont parallèles à des axes définissant des coordonnées géographiques - longitude, latitude. Le calcul de présence du mobile dans une zone de proximité consiste donc à vérifier que les différences, pour chacune des coordonnées du mobile, entre la position extrapolée réelle (établies à partir du registre 2) et la position extrapolée fictive (établie à partir du registre 3) sont inférieures à la demi dimension du rectangle .

Le module 6 établit pour chaque zone de proximité un classement où figurent en tête les mobiles les plus proches d'une des limites de leur zone de proximité.

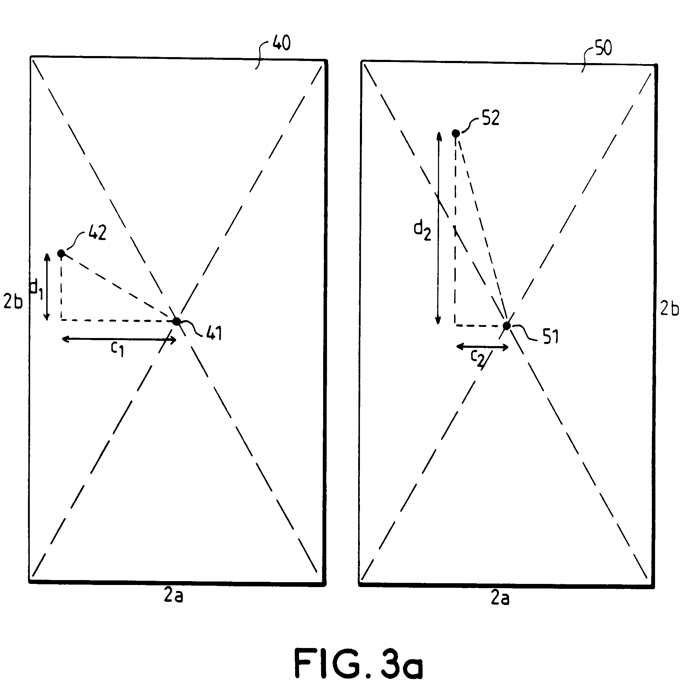

Ce point est ci-après explicité en référence à la figure 3a. Cette figure représente deux rectangles 40, 50 représentant deux zones de proximité centrées sur les positions extrapolées fictives 41, 51 de deux mobiles. Les rectangles sont égaux et ont pour longueur 2b et pour largeur 2a. Les positions réelles extrapolées de ces deux mobiles sont respectivement en 42 et 52. Les différences de longitude de chacun des mobiles sont C₁ et C₂ respectivement et les différences de latitudes sont d₁ et d₂ respectivement. Supposons que (a-C₁) soit plus petit que (a-C₂) et (b-d₂) cela signifie que le mobile se trouvant dans le rectangle 40 est plus proche d'une de ses limites que le mobile se trouvant dans le rectangle 50. Il est donc a priori plus proche de sortir de la zone.

Le module 6 calcule combien de piste doivent être transmises sous forme réduite pour ne pas dépasser le temps alloué. Les pistes les dernières du classement sont sélectionnées jusqu'à arriver au nombre calculé. De la sorte on transmet sous forme réduite uniquement les pistes dont les mobiles sont les moins manoeuvrants.

Lorsque cette sélection et ce calcul sont faits le module 6 transmet au module 4 les pistes à transmettre complètement, les pistes à transmettre sous formes réduite. Au reçu de l'ordre de transmission, le module 4 transmet aux moyens de communication 5 les pistes à transmettre en entier et les pistes à transmettre sous forme réduite, sous leur forme réduite. Les pistes à transmettre en entier sont également transmises au registre 3 et les pistes à transmettre sous forme réduite sont transmises au registre 3 avec les informations cinématiques extrapolées des informations précédentes.

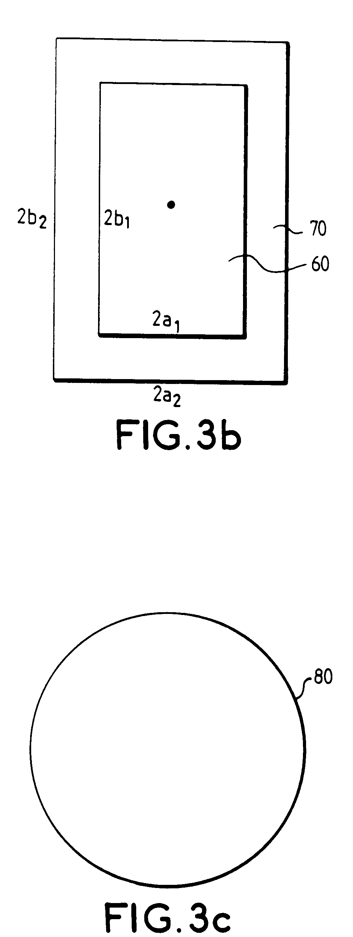

Dans le mode de réalisation ci-dessus décrit, une seule zone de proximité était définie. Sur la figure 3b il a été représenté le cas où deux zones de proximité sont définies. Ces zones sont de forme rectangulaire de côtés 2a₂, 2b₂ pour la plus grande 70.

La zone la plus grande 70 est utilisée lorsque la transmission sous forme réduite de toutes les pistes dont le mobile se trouve dans la zone la plus petite 60 ne suffit pas à réduire suffisamment le temps de transmission.

Sur la figure 3c il a été représenté un exemple de zone de proximité 80 de forme circulaire. Dans ce cas le calcul d'écart de coordonnées pour effectuer le classement des pistes à transmettre sous forme réduite est effectué en fonction de la distance. Les pistes dont la distance entre la position réelle et la position fictive est la plus grande sont transmises en priorité. Dans ce cas le sous-ensemble 6 établit la comparaison des informations d'habillage pour attribuer des distances forfaitaires lorsqu'une information d'habillage figure dans le registre des pistes détectées et ne figure pas dans le registre des pistes transmises.

Les distances ainsi modifiées sont corrigées par multiplication par un coefficient de pondération dont la valeur est fixée en prenant en compte des données d'habillage de la piste.

Les pistes figurant dans le registre des pistes détectées et ne figurant pas du tout dans le registre des pistes transmises reçoivent une distance fixée arbitrairement. Dans le mode de réalisation particulier ici décrit cette distance résulte d'un calcul prenant en compte la nature du mobile, sa vitesse, son temps de présence estimé dans la zone géographique sous contrôle. Le détail des calculs pour attribuer ces distances est à la portée de l'homme du métier avec les indications ci-après. Ces calculs sont effectués en logique floue et visent à attribuer une distance plus grande donc une plus grande priorité si la trajectoire et la vitesse du mobile permettent de conclure qu'il va rester peu de temps dans la zone, s'il s'agit d'un ennemi, si sa trajectoire estimée passe à proximité d'objectifs amis.

La distance ainsi calculée est traitée comme une distance corrigée.

De même l'information de fin de piste fait l'objet de l'attribution d'une distance particulière. Une information de fin de piste est transmise chaque fois que le centre de détection ne détecte pas le mobile objet de la piste pendant un temps supérieur à une valeur prédéterminée. Cette distance peut être corrigée par multiplication par un coefficient de pondération prenant en compte des données d'habillage de la piste.

Les résultats des calculs du sous-ensemble fonctionnel 6 sont transmis pour chaque piste détectée au sélecteur 4, qui, lui, effectue un classement des pistes par ordre de distances corrigées décroissantes.

Dans le mode de réalisation particulier ici décrit les durées de transmission sont préalablement fixées et l'on sait qu'elles correspondent à un nombre n prédéterminés de pistes. En conséquence le sélecteur 4 sélectionne les n pistes dont les distances corrigées sont les plus grandes.

## Revendications

1. Procédé de réduction de la quantité d'informations contenues dans un signal de transmission de pistes de mobiles détectés et suivis par des moyens de détection, le signal étant émis de façon périodique d'un moyen émetteur vers un moyen récepteur, chaque piste comportant des données d'identification de la piste, des données d'habillage, et des données cinématiques notamment de position et de vitesse du mobile objet de la piste, procédé caractérisé en ce que:
- on tient un premier registre des pistes détectées, ce registre contenant notamment les données cinématiques du mobile les plus récentes;
- on tient un second registre des pistes déjà transmises, ce registre comportant notamment les données cinématiques du mobile transmises lors de la précédente transmission de la piste;
- on calcule à partir des données du premier registre, pour une heure fixée, une première position estimée du mobile en supposant que le mobile va à partir de la dernière position détectée conserver son vecteur vitesse;
- on calcule à partir des données du second registre, pour la même heure fixée, une seconde position estimée du mobile en supposant que le mobile va à partir de la dernière position transmise conserver son vecteur vitesse;
- on détermine si la première position du mobile est ou non à l'intérieur de zones de proximité de contour géométrique simple et de dimensions convenues centrées sur la seconde position du mobile;
- on répartit les pistes à transmettre par classes d'appartenance aux zones de proximité et l'on attribue à chaque classe un ordre de priorité de valeur croissante avec les dimensions de la zone;
- on détermine si la durée de transmission des pistes à transmettre est supérieure ou non à une durée préalablement fixée;
- si la durée de transmission est inférieure à la durée fixée toutes les pistes sont transmises normalement;
- si la durée est supérieure à la durée fixée on transmet des pistes des mobiles dont la première position se situe à l'intérieur d'une des zones de proximités, sous une forme réduite.

2. Procédé selon la revendication 1, caractérisé en ce que la forme réduite est réduite à rien.

3. Procédé selon la revendication 1, caractérisé en ce que la forme réduite ne comporte qu'un signe d'identification de la zone de proximité de la première position du mobile et les données d'identification de la piste.

4. Procédé selon la revendication 1, caractérisé en ce que la quantité de pistes transmises sous une forme réduite est la quantité minimum nécessaire pour amener la durée du signal de transmission au-dessous d'un seuil prédéterminé.

5. Procédé selon la revendication 4, caractérisé en ce que les pistes transmises en priorité sont celles pour lesquelles la seconde position du mobile est la plus proche des limites de la zone de proximité à laquelle appartient la première position .

6. Procédé selon l'une des revendication 1 à 5, caractérisé en ce que les zones de proximité ont la forme de rectangle.

7. Procédé selon l'une des revendications 1 à 3, caractérisé en ce que les zones de proximité ont la forme de cercles, l'appartenance d'une première position à une zone étant alors une fonction de la distance de la seconde position à la première position.

8. Procédé selon la revendication 7, caractérisé en ce que:
- on calcule la distance séparant la première de la seconde position;
- on attribue pour les pistes figurant dans le premier registre et ne figurant pas dans le second une distance arbitraire;
- on ajoute aux distances calculées des distances arbitrairement fixées pour chaque élément d'habillage de la piste non encore transmis et on attribue à chaque piste la distance ainsi modifiée;
- on affecte le mobile à une zone de proximité en fonction de la distance ainsi modifiée.

9. Procédé selon la revendication 8, caractérisé en ce que les distances modifiées sont corrigées par multiplication par un coefficient pondérateur qui est une fonction de paramètres figurant dans les données d'habillage.

10. Procédé selon la revendication 8, caractérisé en ce qu'on attribue en outre à chaque fin de piste une distance prédéterminée.

11. Procédé selon la revendication 10, caractérisé en ce que la distance attribuée de fin de piste est corrigée par multiplication par un coefficient pondérateur qui est une fonction de données d'habillage de la piste.
